# EUROPEAN PATENT APPLICATION

(11) **EP 1 689 150 A1**
(43) Date of publication of application: **09.08.2006**
(21) Application number: 05250670.6
(22) Date of filing: 07.02.2005
(51) Int. Cl.: H04M 1/247

(54) **Device for computer-telephony comprising integrated loudspeakers and audio input/output jacks**

(71) Applicant: Mitel Networks Corporation, Ottawa, Ontario K2K 2W7 (CA)
(72) Inventor: Mahan, John, Kanata Ontario K2K 1X7 (CA); Fahrendorff, Anders, Ottawa Ontario (CA); Gorman, Chris, Ottawa Ontario K12 6C6 (CA); Langlois, Michael, Almonte Ontario K0A 1A0 (CA)
(74) Representative: Naismith, Robert Stewart

(57) **Abstract**

An integrated computer-telephony device, comprising a telephone console connected to a PBX for implementing telephony functions that result in receiving and transmitting phone audio signals. The console includes at least one of a pair of integrated stereo speakers and a headphone audio jack, an audio input jack for receiving audio from an external audio source and an external audio jack for outputting audio to an external audio reproduction device. An audio controller is provided for directing audio from the external audio source to one of either the external audio jack and one of either the pair of integrated stereo speakers and the headphone audio jack in the absence of phone audio signals, and for directing the phone audio signals to one of either the pair of integrated stereo speakers and the headphone audio jack in the presence of phone audio signals.

## Description

### BACKGROUND OF THE INVENTION

### 1. Field of the Invention

The present invention is directed to personal computers and telephony, and more particularly to an interactive system by which a computer and telephone function cooperatively to implement a multiplicity of functions invoked by a user.

### 2. Description of the Related Art

Software applications are known in the art for implementing telephony features using a personal computer. According to existing First Party Call Control architectures, a physical connection is provided between the telephone and personal computer for providing Computer Telephony Integration (CTI). Such prior art CTI architectures have suffered from extreme limitations in functionality and ease of use. For example, in order to place a phone call, a user typically must first close or minimize whatever application he or she is currently running, open the CTI application, enter the digits to be dialed via point-and-click numbers, and then click an accept or dial button. Alternatively, according to some CTI architectures, the user is able to navigate or browse a telephone directory in order to identify the party to be called and then, once located, highlight the party's name and click a dial button.

Understandably, the awkwardness of using such systems and the limited features provided thereby have led some consumers to abandon prior art CTI systems in favour of more functional telephone sets or even "plain old telephone sets" (POTS) with enhanced features being provided by the central office.

One of the reasons for the awkwardness and limited functionality of prior art CTI architectures is that there is no seamless integration of functions activated by the telephone and functions activated directly or indirectly by the computer. For example, when listening to streamed MP3 audio via the desktop computer speakers or a headset, there is no integrated functionality to switching audio control to the speakers between the MP3 player and telephony application (e.g. speakerphone).

Recent developments in the standardization of computer interfaces have led to increased development of software applications which are adapted to integrate functionality of a personal computer with various and diverse external devices. For example, commonly-owned US Patent 6,018,571, discloses an interactive telephone and PC-based software application which that overcomes the limitations of prior art CTI architectures.

### SUMMARY OF THE INVENTION

It is an aspect of the present invention to provide an interactive system by which a computer and telephone function cooperatively to implement a multiplicity of user-invoked features. Physically, the system comprises a telephone console which is connected to a personal computer on which a programming tool application is executed, and to a Local Area Network (LAN) for communication with an iPBX such as the Mitel 3100 Integrated Communications Platform (ICP). The operation of the iPBX and the communication of messages between the telephone console and iPBX (e.g. SIP or MINET), are outside the scope of the present invention but would be well understood by a person of ordinary skill in the art. The telephone console includes a plurality of user-definable function keys in addition to the keypad, display and other standard buttons such as speaker volume, speaker on/off, on-hook/off-hook, mute, etc. The user-definable function keys are programmable via the programming tool application running on the computer. The interactive functionality of computer and telephone console according to the present invention provides for integrated control of such features as audio switching and control, call management, speed dial, etc.

The above aspects can be attained by an integrated computer-telephony device, comprising a telephone console connected to a PBX for implementing telephony functions that result in receiving and transmitting phone audio signals. The console includes at least one of a pair of integrated stereo speakers and a headphone audio jack, an audio input jack for receiving audio from an external audio source and an external audio jack for outputting audio to an external audio reproduction device. An audio controller is provided for directing audio from the external audio source to one of either the external audio jack and one of either the pair of integrated stereo speakers and the headphone audio jack in the absence of phone audio signals, and for directing the phone audio signals to one of either the pair of integrated stereo speakers and the headphone audio jack in the presence of phone audio signals.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

FIG. 1 shows the computer-based telephony system according to a general aspect of the present invention;

FIG 2A and FIG. 2B are a perspective end view and a front elevation view, respectively, of a telephony console in the system of FIG. 1;

FIG. 3 is a connection diagram showing interconnection of components comprising the computer-based telephony system of FIG 1;

FIG 4 shows a graphical user interface display generated by a programming tool application for programming user-definable function keys on the telephony console, according to a first embodiment of the present invention;

FIGS. 5A- 5K are graphical user interface display windows generated by a programming tool application for each of a plurality of functions;

FIG. 6 shows a graphical user interface display generated by a client application for leveraging enhanced communications;

FIG 7 is a circuit diagram showing audio signal switching within the telephony console;

FIG. 8 is a flow chart showing operation of the audio signal switching circuit diagram of FIG 7.

### DETAILED DESCRIPTION OF THE PREFERRED EMBODIMENTS

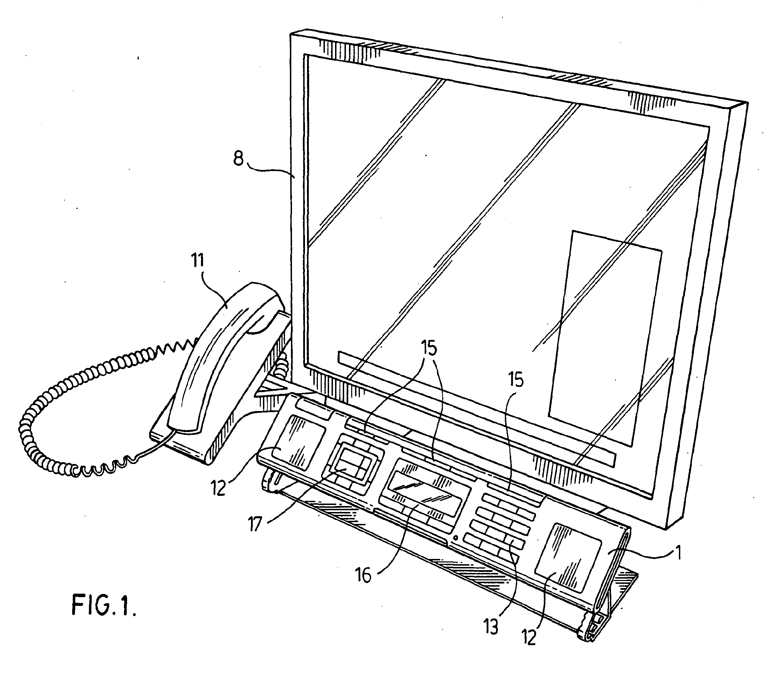

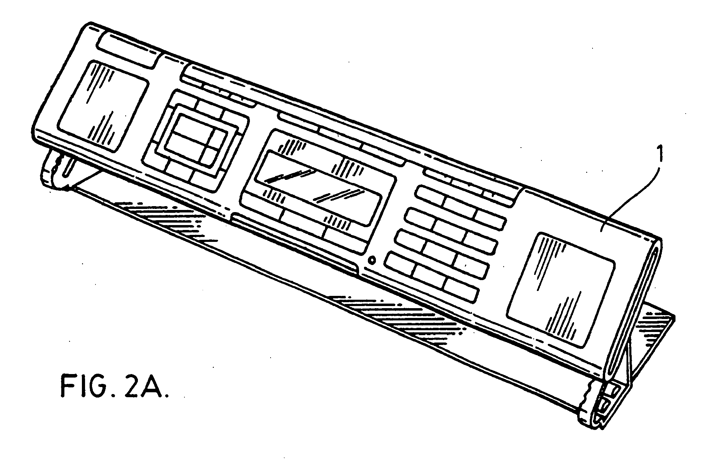

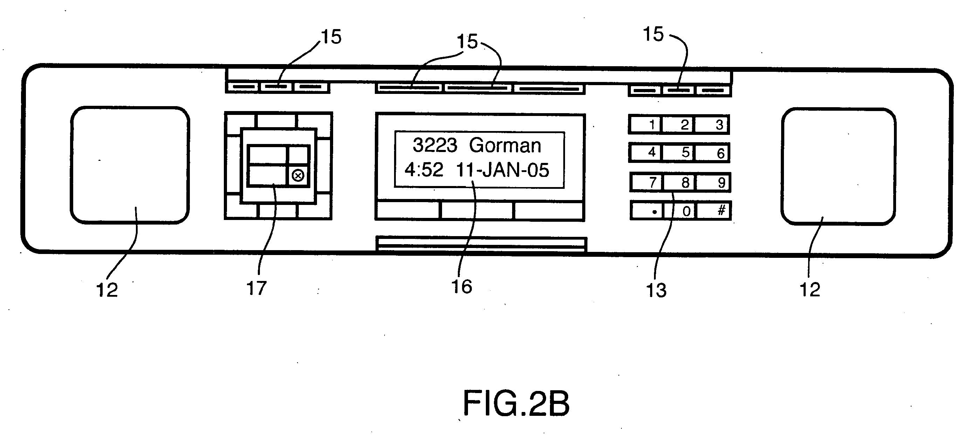

Turning to FIGS. 1 - 3, the computer-based telephony system of the present invention is shown in its broadest aspect comprising a telephone console 1 connected to a telephone switching system (not shown) via a Local Area Network. As discussed above, the telephone switching system is preferably a Mitel 3100 Integrated Communications Platform (ICP), or iPBX. The telephone console 1 is also connected to a personal computer 7 via a serial link 9 and provides Voice-Over-IP (VoIP) telephony in one of either MINET (proprietary Mitel VolP communication protocol) or SIP modes. The personal computer 7 includes a monitor or display 8 as well as a mouse pointer and keyboard (not shown), in a well known manner. According to the preferred embodiment, the serial link is an Ethernet cable, although other suitable data communication links are possible (e.g. USB). The computer 7 executes a TAPI compliant software application for communicating with the telephone console 1 to implement various telephony functions.

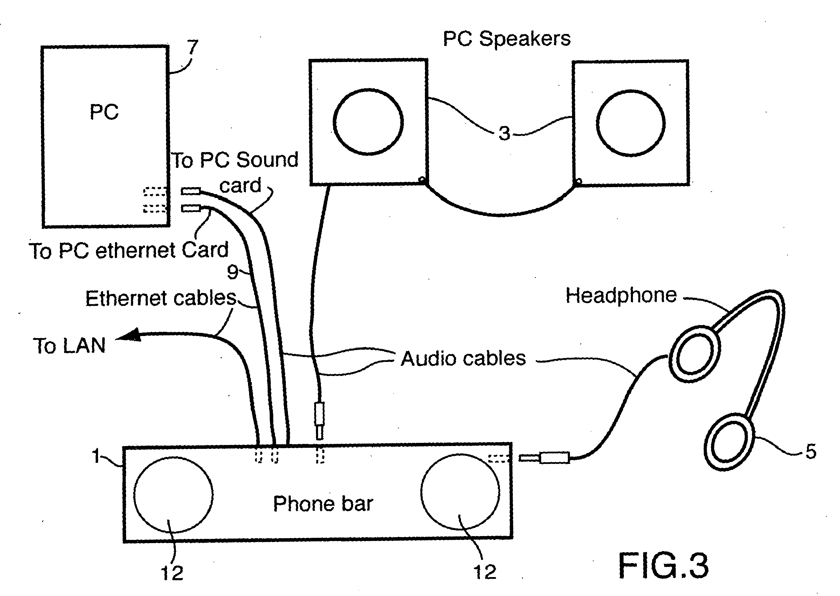

The telephone console 1 may also be connected to a pair of external speakers 3, and to an audio device (e.g. handset 11 (FIG. 1), headset 5 (FIG. 3), or ottler device such as a conference unit). A pair of internal speakers 12 is provided, along with a keypad 13, and a plurality of programmable function keys 15. As discussed in greater detail below, respective ones of the function keys may be programmed via the programming tool application executed on computer 7 to activate predetermined telephony functions or software functions on the computer. For example, in one scenario a function key may be programmed to automatically activate a "Do Not Disturb" feature while in another scenario the function key may be programmed to launch a software application such as Microsoft Outlook.

The set 1 also includes a display 16 and plurality of hard-programmed function keys 17 for controlling standard telephony functions such as on-hookloff-hook, mute, volume, etc.

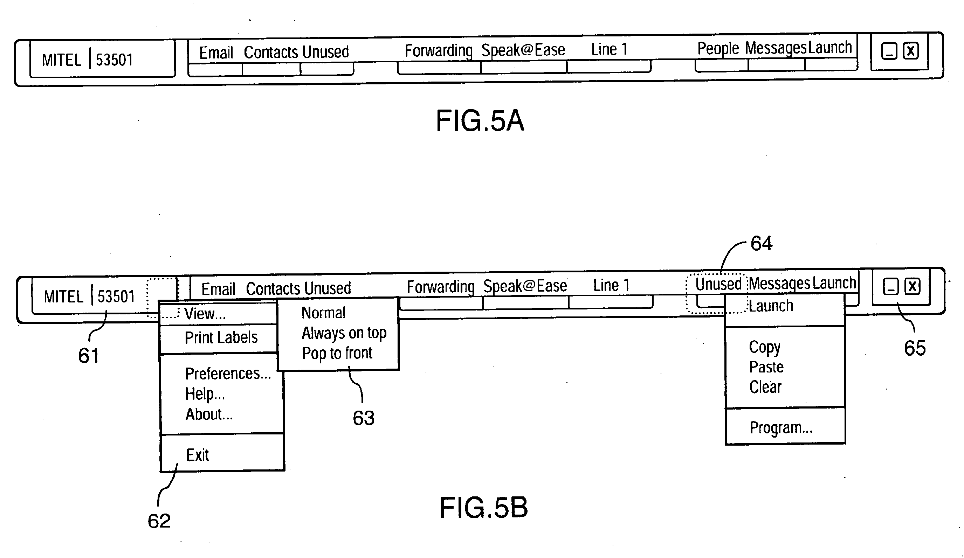

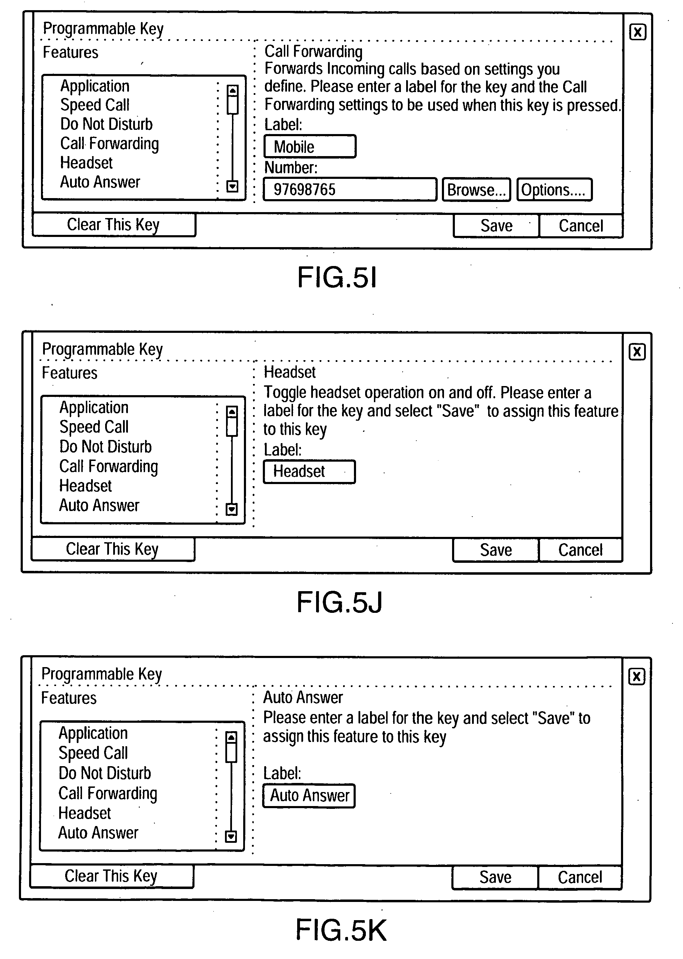

As indicated above, the telephone console 1 communicates with an iPBX (not shown) over the LAN, in order to implement telephony features. Preferably, communication between the iPBX and telephone console 1 is via SIP or MINET messaging. MiNET is a stimulus protocol for use by 'dumb phones', such as telephone console 1. All intelligence resides in the iPBX. In order to assign features to the programmable keys 15, a session is opened between the telephone console 1 and the PBX, and the user-selected button assignments are then downloaded by the iPBX to the telephone console 1 under control of computer 7. In operation, the MiNET messages simply report which buttons have been pressed and are used to set up text displays on the computer monitor 8. In operation, both the telephone console 1 and the soft phonebar status window (see FIG 5A) send the appropriate MiNET messages for the button presses. The telephone console 1 and the soft phone bar window are thereby kept in synchronization with respect to the features assigned to each key.

On the other hand, SIP is a highly functional protocol for use with intelligent sets. To keep the telephone console 1 in sync with the programming tool application key assignments, the PC application uses a REGISTER message to transmit the assignments to an application running in the telephone console 1. In operation, the console 1 analyzes its own button presses and generates the proper SIP messages for call forward, do not disturb, etc. For operation from the phone bar itself (FIG 5A), a SIP event package is set up to report the soft button clicks to the telephone console 1. The SIP event package handles these events the same way as events resulting from the pressing of the physical buttons 15.

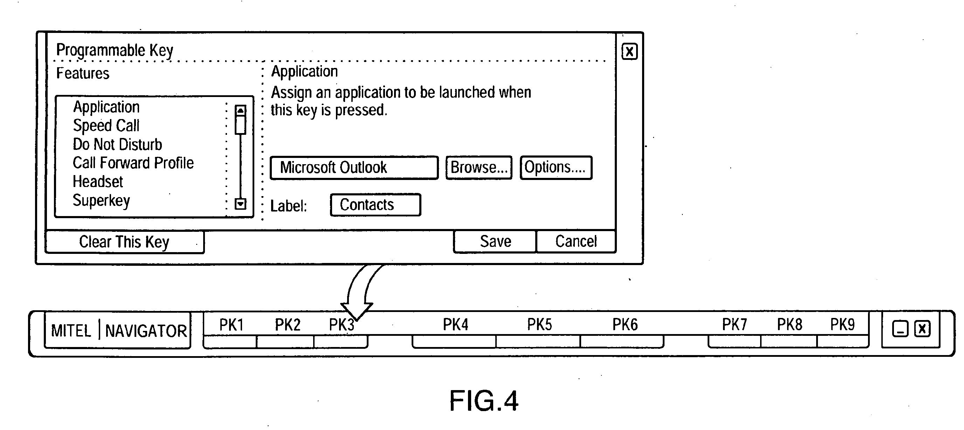

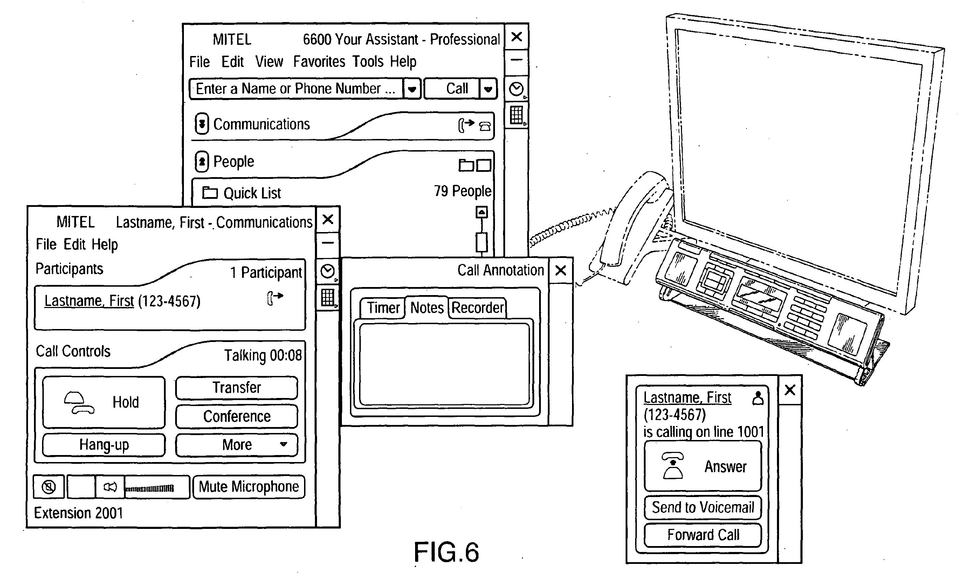

In FIG. 4, a GUI window is shown which allows the user to assign features to the programmable function keys 15. The user can assign either an Application, such as Microsoft Outlook, a speed dial, do not disturb, or other feature, to a key (e.g. PK3) by highlighting the feature within a feature list window and clicking the Save button. As shown in FIG 6A, an on-screen button bar window is displayed on the monitor 8 of PC 7 that replicates the appearance of the programmable keys on the physical console 1, and displays the programmed feature assigned to each of the keys 15.

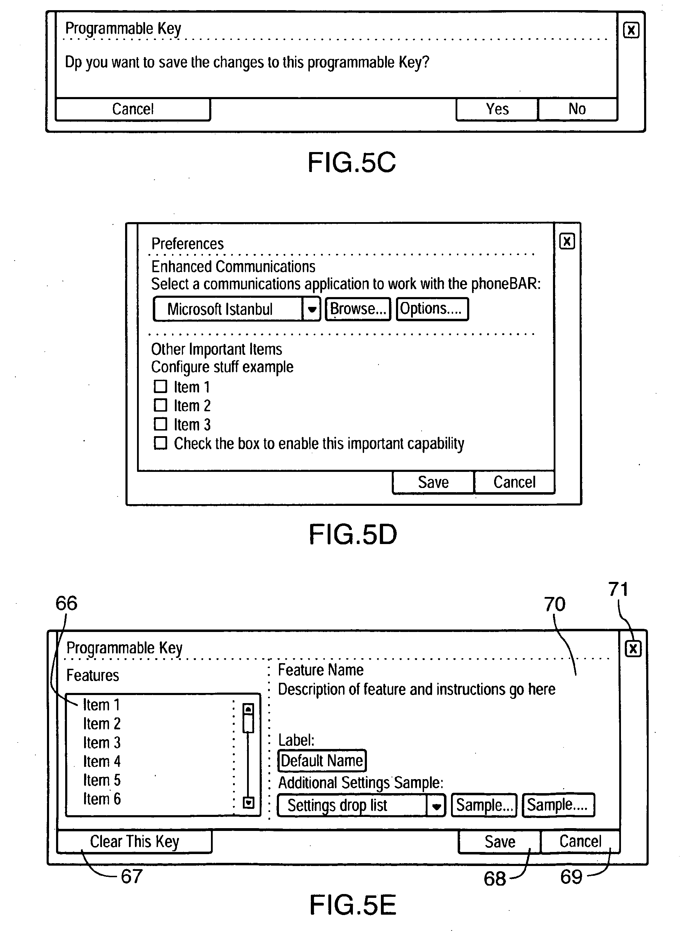

As shown in FIG. 58, the user can position the button bar window on the monitor screen by dragging any inactive portion 61 of the window. A drop-down main menu 62 may be opened from a drop arrow to reveal additional menu selections. The View selection has a submenu 63 of three mutually exclusive option: Normal - wherein the button bar behaves like a normal window, Always on top - wherein the button bar floats over all other applications on the desktop, or Pop to front - wherein the window pops to front on call activity of key press. The Print Label selection is used to print an overlay card for identifying the features assigned to the various keys 15 on the console 1. Although not shown, the user can select the font, font size, printer and then depresses a Print Card button which causes the card to be printed with the selected feature appearing thereon. The Preferences selection opens a configuration or properties window (FIG. 5D), Help launches a web based help application, About splashes the screen with version information, and Exit closes the window leaving the application running.

A programmed feature may be launched either by depressing the appropriate key 15 on the console 1 or by clicking the button on the button bar window. Clicking on the text 64 allows for renaming the feature, after which a dialogue window pops up (FIG. 5C) for user confirmation of the selection. A right-click on the text 64 opens a context menu containing Launch - for launching an assigned feature (which is dimmed if no feature has been assigned (i.e. the key is "Unused")), Copy, Paste and Clear selections, and Launch - which opens the programmable key window.

The on-screen button bar window may be minimized or closed using conventional buttons 65.

A generic Programmable Key window is shown if FIG 5E, wherein each item 66 is one of a number of generic features (SIP, MINET or other), such as Application, Speed Call, Do not disturb, Call Forwarding, Headset, Auto Answer, etc. Button 67 clears any assigned features and prompts the user to "Clear this programmable key?", with Yes, No and Cancel being the resulting conventional button options. The button 67 is dimmed if unused. The Save button 68 saves settings and labels the key, and then closes the window. The Cancel button 69 discards any changes to settings and label, and closes the window. The description and options for a highlighted feature are displayed at 70. The Close button 71 closes the programmable key window. If changes have been made, the user is prompted to "Save the changes to the programmable key?" with Yes, No and Cancel being the resulting conventional button options.

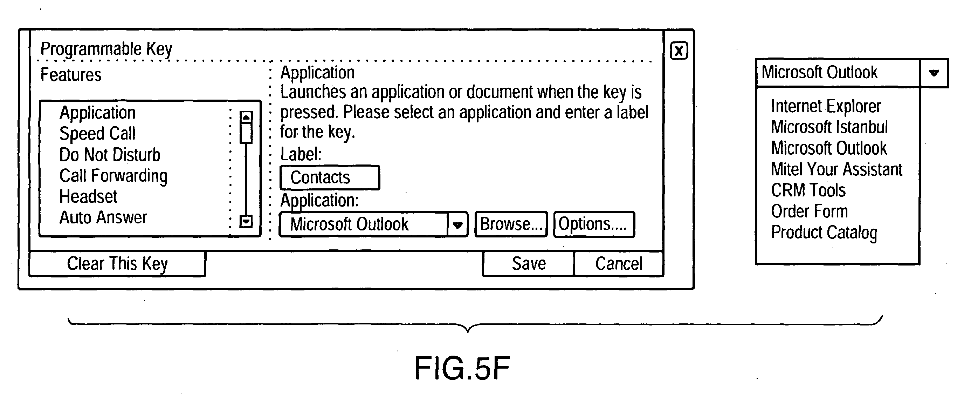

As shown in FIG. 5F, the Application feature may be any of a selection of conventional available desktop applications, such as Internet Explorer, Microsoft Istanbul, Microsoft Outlook, Mitel Your Assistant (YS), CRM Tools, etc.

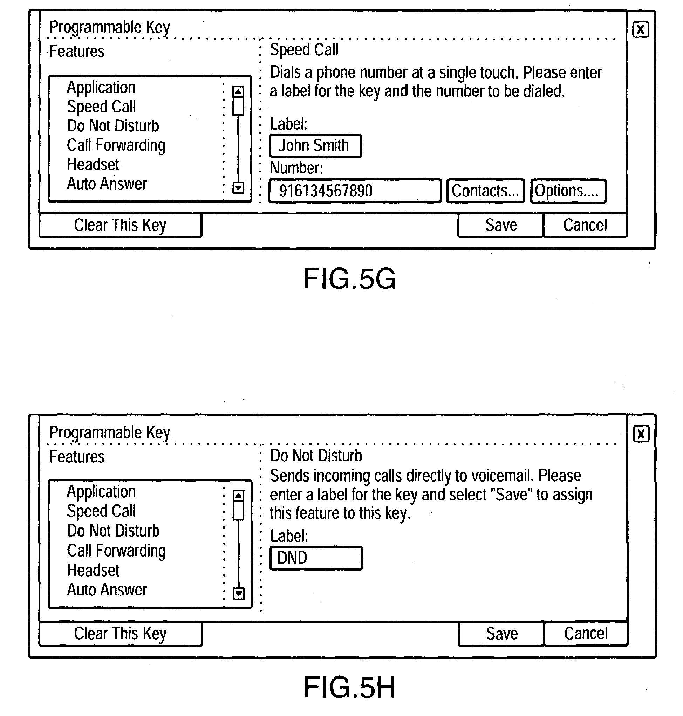

If Speed Call is selected (FIG. 5G), then the key may be labeled with the name of the party to be called, which may be selected from a Contacts database, etc.

Window displays for programming the Do Not Disturb, Call Forwarding, Headset and Auto Answer features are shown in FIGS. 5H - 5K, respectively.

FIG 6 schematically illustrates the manner in which the system according to the present invention integrates with existing telephony applications such as Mitel Your Assistant, and can leverage Microsoft LCS to provide enhanced communication capabilities to suit the diverse needs of contact centers, CRM, MSN, hospitality, retail, education, professionals, etc. The computer 7 executes one or more such enhanced communications applications, which do not form part of the present invention, but would be well known to a person of ordinary skill in the art. Typically, such applications include a plurality of user interface components and a plurality of engine components for call processing, data storage and manipulation, application configuration management and audio recording and playback. The engine components may be located in one or more Dynamic Link Libraries (DLLs) to provide the necessary information for display or printing by the user interface components. The user interface components may be contained in a main executable file and isolated from the non-user or engine components to allow for future interface developments.

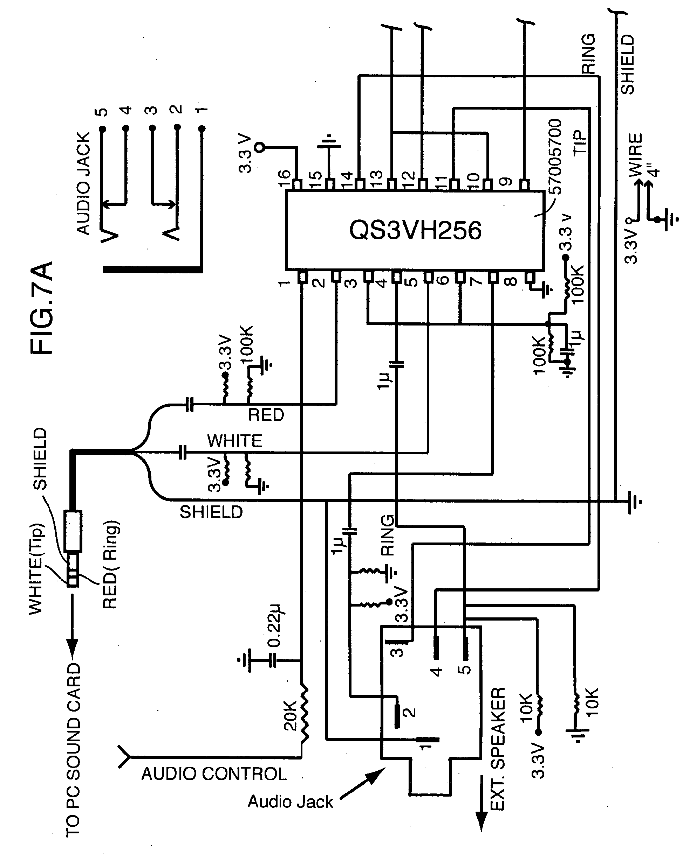

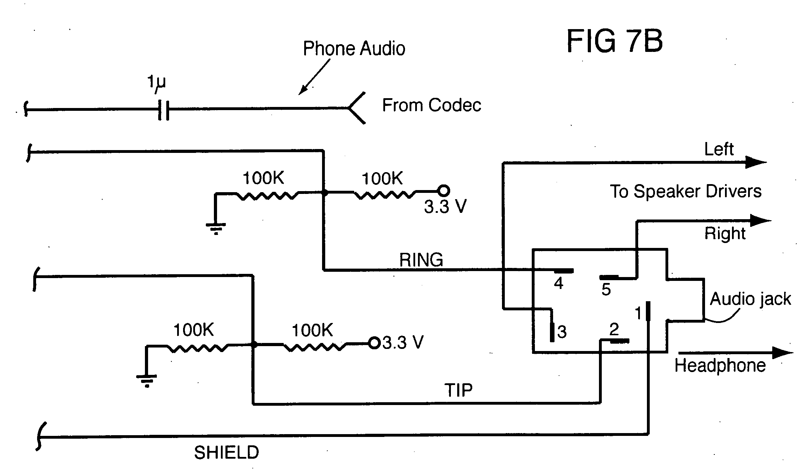

As discussed above, one important aspect of the invention relates to the switching and prioritizing audio streams as between the telephony applications and other multimedia applications running on the PC 7. FIG 7 is a schematic diagram of circuitry within the telephone console 1, to control the routing of such audio streams.

Audio signals from a sound card on computer 7 are applied to pins 2 and 5 of a multiplexer (QS3VH256) while phone audio from a CODEC (not shown) is applied to pins 13 and 10.

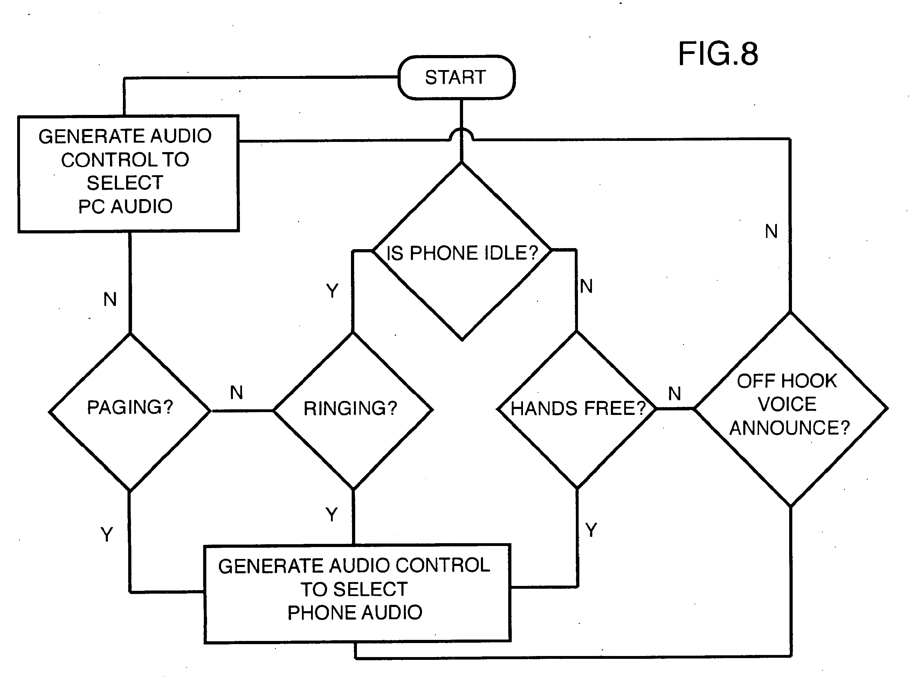

The multiplexer selects the input audio source from pins 11 and 14 or from pins 13 and 10, depending upon the control signal logic state of an audio control signal applied to pin 1, as shown in the flowchart of FIG. 8. Thus, if the phone is idle and there is either an incoming call or paging, the control signal selects phone audio (pins 10 and 13) for application to the speakers 12 (or headphones 5). Likewise, if the phone is not idle (i.e. a call is in progress) and is either in hands-fee mode or in off-hook announce mode, the control signal selects phone audio (pins 10 and 13) for application to the speakers 12 (or headphones 5). Otherwise, the control signal selects PC audio (pins 11 and 14) for application to the speakers 12 (or headphones 5) or to the external speakers 3, if they are connected.

The headphone audio jack functions to bypass audio signals intended for the phone speakers 12. Thus, when the phone is idle and there is no incoming call or paging request, any audio stream from the PC sound card (e.g. MP3 audio) is reproduced on the console speakers 12 (left and right), unless headphones 5 or external speakers 3 are connected, in which case the audio is routed to the headphones or speakers 3, respectively, and the speakers 12 are disabled. Unlike the external speakers 3, the phone speakers 12 (or headphone 5, if connected) are capable of receiving either phone audio or audio signals from the PC sound card. As indicated above, the audio signals received from the PC sound card are directed to the phone speakers 12 (or headphone 5), provided that external speakers 3 are not connected. As discussed above in connection with FIG. 8, audio signals from the phone take priority over PC audio signals, and are directed to either the phone speakers 12 or headphone 5 (if connected), but preferably not to the external speakers 3. In one contemplated embodiment, PC audio is continually routed to the external speakers 3 (but at a reduced volume), while the priority phone audio is routed to the internal speakers 12 (or to headphones 5, if connected to the telephone console 1).

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. An integrated computer-telephony device, comprising:
a telephone console connected to a PBX for implementing telephony functions that result in receiving and transmitting phone audio signals, said telephone console including at least one of a pair of integrated stereo speakers and a headphone audio jack, an audio input jack for receiving audio from an external audio source and an external audio jack for outputting audio to an external audio reproduction device; and
an audio controller for directing audio from said external audio source to one of either said external audio jack and one of either said pair of integrated stereo speakers and said headphone audio jack in the absence of said phone audio signals, and for directing said phone audio signals to one of either said pair of integrated stereo speakers and said headphone audio jack in the presence of said phone audio signals.

2. The integrated computer-telephony device of claim 1, wherein said audio controller one of either mutes or reduces volume of said audio from said external audio source to said external audio jack in the presence of said phone audio signals.

3. The integrated computer-telephony device of claim 1, wherein said external audio source is a PC sound card.

4. The integrated computer-telephony device of claim 1, wherein said external audio reproduction device is a pair of loudspeakers.

5. The integrated computer-telephony device of claim 1, wherein said telephone console further includes a serial data interface connected to a computer executing a software application for receiving first data signals from said telephone console generated in response to user input to said telephone console and in response implementing predetermined software functions on said computer, for transmitting further data signals from said computer to said telephone console in response to a user input to said computer whereupon said telephone console generates and transmits messages to said PBX for implementing predetermined ones of said telephony functions.

6. The integrated computer-telephony device of claim 5, wherein said telephone console further includes a plurality of user programmable functions keys, and wherein said computer executable software application (I) generates and displays a window including an area depicting said user programmable function keys and a menu associated with each of said depicted programmable function keys, said menu containing a plurality of user-selectable software functions and said telephony functions to be assigned to respective ones of said programmable function keys, and (ii) transmits predetermined data signals from said computer to said telephone console in response to user selection of said user-selectable software functions and said telephony functions whereby said telephone console assigns said user-seiectable software functions and telephony functions to respective ones of said user programmable function keys on said telephone console.

7. The integrated computer-telephony device of claim 6, wherein said computer executable software application prints an overlay card listing each one of said software functions and telephony functions assigned to respective ones of said user programmable function keys for placement on said telephone console.
